# EUROPEAN PATENT SPECIFICATION

(11) **EP 4 681 196 B1**
(45) Date of publication and mention of the grant of the patent: **18.11.2026**
(21) Application number: 24709338.8
(22) Date of filing: 01.03.2024
(51) Int. Cl.: G10L 15/22, G10L 15/26, G06F 40/20, G06F 40/284, G06F 40/30

(54) **METHOD AND APPARATUS FOR SELECTING A DRIVING MODE OF A VEHICLE**
VERFAHREN UND VORRICHTUNG ZUR AUSWAHL EINES FAHRMODUS EINES FAHRZEUGS
PROCÉDÉ ET APPAREIL DE SÉLECTION D'UN MODE DE CONDUITE D'UN VÉHICULE

(30) Priority: 17.03.2023 GB 202303954
(43) Date of publication of application: 21.01.2026
(73) Proprietor: Jaguar Land Rover Limited, Coventry, Warwickshire CV3 4LF (GB)
(72) Inventor: METCALFE-WILLIAMS, Elizabeth, Coventry Warwickshire CV3 4LF (GB); FITZKE, Otto, Coventry Warwickshire CV3 4LF (GB); EARLE, James, Coventry Warwickshire CV3 4LF (GB); NG KON TIA, Eva, Coventry Warwickshire CV3 4LF (GB)
(74) Representative: Jaguar Land Rover Patents Department
(86) International application number: PCT/EP2024/055371
(87) International publication number: WO 2024/193983

(56) References cited:
- WO-A1-2022/205211
- CN-A- 113 990 299
- CN-A- 115 457 960
- KR-A- 20190 011 458
- US-A1- 2014 136 013
- US-A1- 2020 005 778
- US-A1- 2021 358 496
- US-A1- 2022 063 630
- ANJUM MOHD ET AL: "Improving Autonomous Vehicle Controls and Quality Using Natural Language Processing-Based Input Recognition Model", SUSTAINABILITY, vol. 15, no. 7, 25 January 2023 (2023-01-25), CH, pages 5749, XP093155625, ISSN: 2071-1050, DOI: 10.3390/su15075749
- DEVLIN JACOB ET AL: "BERT: Pre-training of Deep Bidirectional Transformers for Language Understanding", PROCEEDINGS OF NAACL-HLT 2019, 7 June 2019 (2019-06-07), pages 4171 - 4186, XP055850483

## Description

### TECHNICAL FIELD

The present disclosure relates to a method and apparatus for selecting a drive mode of a vehicle. In particular, the present disclosure relates to a method and apparatus for selecting a drive mode of a vehicle in response to a natural language description conditions in which the vehicle is to be driven. Aspects of the invention relate to a method, to an apparatus, and to a computer readable medium.

### BACKGROUND

Vehicles may be provided with multiple driving modes to adapt the operation of the vehicle to the prevailing conditions. For example, a four wheel drive may be activated when driving off-road or in icy conditions but may be unnecessary when driving on a clear tarmac surface. Driving conditions may change quickly during a journey, for example, the temperature may drop and snow may fall, or the road surface may transition from tarmac to gravel track. Driving modes may control a range of settings, for example affecting the control of the vehicle's gearbox and engine response, to provide a combination of traction, agility and control adapted to the terrain.

While driving a vehicle, it can be beneficial to change a selected vehicle driving mode in response to changing driving conditions, but when concentrating on driving, it may be difficult and potentially dangerous to search for information on the correct driving mode to select for the current conditions and to activate the selection. The driver could stop to allow time to review the available settings and/or a manual, but this is often undesirable and at times potentially problematic, e.g. stopping while driving up hill when on snow and ice will lose vehicle momentum and make setting off again more difficult.

Voice activated control of vehicle settings may be available on some vehicles, but requires that the driver knows the name of the correct driving mode to request along with any keywords required by the voice control system to access the relevant settings.

Known art includes WO 2022/205211 A1 (which describes a method and apparatus for controlling vehicle running and a vehicle), US 2022/063630 A1 (which describes a method and apparatus for controlling terrain mode using a road condition judgement model based on deep learning), Devlin Jacob et al., "BERT: Pre-training of Deep Bidirectional Transformers for Language Understanding", Proceedings of NAACL-HLT 2019, and US 2021/358496 A1 (which describes a voice assistant system for a vehicle cockpit system).

It is an aim of the present invention to address one or more of the disadvantages associated with the prior art.

### SUMMARY OF THE INVENTION

Aspects and embodiments of the invention provide a method, an apparatus, and a computer readable medium as claimed in the appended claims

According to an aspect of the present invention there is provided a computer implemented method comprising obtaining an input sequence, the input sequence including a natural language description of a condition of terrain to be traversed by a vehicle, processing the input sequence using a natural language processing, NLP, engine to classify the input sequence as a predicted terrain condition of a set of terrain conditions, determining a drive mode from a set of drive modes for the vehicle corresponding to the predicted terrain condition, outputting an indication of the determined drive mode to the vehicle, and causing the vehicle to automatically select the determined drive mode.

Advantageously, the computer implemented method provides for a user to describe in their own words conditions around the vehicle (e.g. I'm stuck in deep snow, what should I do?). This natural language description can then be processed to identify the correct or preferred drive mode for operating the vehicle in the current conditions. Thus, a user is not expected to know which mode is appropriate, but automatically receives a drive mode selection or recommendation based on a natural language description of the actual conditions.

Optionally, the set of drive modes comprises one or more of a normal drive mode, a grass/gravel/snow drive mode, a mud drive mode, a sand drive mode, and a rock drive mode.

Optionally, each drive mode comprises one or more vehicle settings to control operation of an engine, gearbox, suspension, and differential of the vehicle.

Optionally, the NLP engine is trained to predict a terrain condition associated with the natural language description of a condition of terrain to be traversed by a vehicle using a set of training data, the training data comprising training example input/output pairs of natural language descriptions of condition of terrain and associated terrain conditions.

Optionally, obtaining the input sequence comprises obtaining an audio signal, and performing speech-to-text conversion on the audio signal to generate the input sequence.

Advantageously, the use of speech-to-text further increases the convenience for the user when reporting a fault symptom by allowing the user to verbally announce the issue which can then be recorded/captured by a microphone associated with the vehicle user input device and converted to an suitable input for the natural language processing engine.

Optionally, the input sequence is obtained via text entry to one of an application executed on a mobile device, a web interface, and a vehicle user input device.

Advantageously, the user entry of the natural language symptom description can be achieved via multiple interfaces, allowing a user to interface with the invention via a mobile device or laptop as well as via a vehicle user input device.

Optionally, processing the input sequence using the NLP engine further comprises mapping the input sequence to a first embedding vector, the first embedding vector representing a semantic meaning of the natural language description of the condition of terrain to be traversed by the vehicle, obtaining a plurality of second embedding vectors, each second embedding vector corresponding to one of the drive modes from the set of drive modes for the vehicle and representing a semantic meaning of a description of a terrain condition associated with the one of the drive modes, and wherein determining the drive mode comprises, for each second vector of the plurality of second vectors, calculating a similarity score to the first vector and selecting a drive mode corresponding to the second vector having the highest similarity score.

Advantageously, the use of embedding vectors allows the output of a generative NLP algorithm to be constrained to one of a set of specified classes, or drive modes, based on a similarity between the description of the terrain conditions provided by the user and known descriptions of terrain conditions appropriate for each drive mode.

Optionally, the NLP engine comprises a neural network including a pre-trained NLP algorithm.

Optionally, the pre-trained NLP engine comprises one of: a Bidirectional Encoder Representations from Transformers, BERT, model; a Generative Pre-trained Transformer, GPT, model; Text-to-Text Transfer Transformer, T5, model; or another large language model.

Advantageously, a wide range of pre-trained BLP algorithms can be used and have found to be accurate and easily adaptable to vehicle issue identification based on an input sequence including a description of a symptom associated with the vehicle issue.

Optionally, the natural language processing engine further comprises a tokenizer to receive the input sequence and generate a vector representation of the sequence of words for input to the pre-trained NLP algorithm, wherein the tokenizer is configured to recognize automotive specific words in the input sequence.

Advantageously, use of a tokenizer adapted to recognize automotive specific words and abbreviations may significantly improve the accuracy of the NLP engine in understanding and classifying natural language descriptions of vehicle issue symptoms.

Optionally, the neural network further comprises a prompt-table comprising a task specific set of virtual tokens comprising at least one virtual token to be embedded in the vector representation of the sequence of words, the task specific set of virtual tokens to cause the pre-trained NLP algorithm to classify the input sequence as the predicted terrain conditions of the set of terrain conditions.

Advantageously, the incorporation of a task specific set of virtual tokens to be included in the vector representation of the input sequence allows the response of the pre-trained NLP algorithm to be influenced to provide a desired output type. The use of a prompt-table may be particularly appropriate for generative NLP algorithms.

According to another aspect of the invention, there is provided an apparatus comprising a processor, and a memory comprising computer program instructions that when executed by the processor cause the apparatus to obtain an input sequence from a user of a vehicle, the input sequence comprising a sequence of words including a natural language description of a condition of terrain to be traversed by a vehicle, process the input sequence using a natural language processing, NLP, engine to classify the input sequence as a predicted terrain condition of a set of terrain conditions, determine a drive mode from a set of drive modes for the vehicle corresponding to the predicted terrain condition, outputting an indication of the determined drive mode to the vehicle, and causing the vehicle to automatically select the determined drive mode.

Advantageously, the apparatus is operable to receive a natural language description of terrain conditions around the vehicle (e.g. I'm stuck in deep snow, what should I do?) in the user's own words and to understand the semantic meaning of the description. This natural language description can then be processed to identify the correct or preferred drive mode for operating the vehicle in the current conditions. Thus, a user is not expected to know which mode is appropriate, but automatically receives a drive mode selection or recommendation based on a natural language description of the actual conditions.

Optionally, the computer program instructions, when executed by the processor, are further to cause the apparatus to automatically select the determined drive mode.

Advantageously, no further action may be required by the user and the determined drive mode may be selected automatically. This may avoid a user who may be unfamiliar with the relevant controls being distracted by setting the indicated drive mode, allowing them to concentrate on operating the vehicle.

According to another aspect of the invention, there is provided a method of training a natural language processing engine for classifying an input sequence comprising a sequence of words describing a symptom associated with a vehicle issue as an predicted vehicle issue of a set of vehicle issues, the natural language processing engine comprising a neural network including a pre-trained natural language processing, NLP, algorithm comprising a plurality of layers of nodes of the neural network, wherein the weights of the pre-trained NLP algorithm are fixed, and one or more further layers of nodes of the neural network, wherein the method comprises receiving a set of training data to train the natural language processing engine, the set of training data comprising training example input/output pairs of natural language descriptions of terrain conditions and defined terrain conditions with an associated drive mode, inputting the natural language description from one or more of the input/output pairs from the set of training data to obtain a predicted classification result, characterizing an error between the predicted classification result and the defined terrain conditions corresponding to the natural language description of the training set, and using an optimisation algorithm to update weights of one or more further layers of the neural network based on the characterized error.

Advantageously, the method of training a natural language processing engine allows for training of the natural language processing engine to receive a user's description of a prevailing conditions around the vehicle in their own words and to determine/classify the user's description as corresponding to conditions associated with a particular drive mode. The NLP engine trained this way can be equally robust to the use of technical automotive language and acronyms or more generic non-technical language and is therefore applicable to users of all skill/knowledge levels.

Optionally, the neural network further comprises a tokenizer to receive the input sequence and generate a token sequence, the tokenizer adapted to recognize automotive related terms in the input sequence.

Advantageously, use of a tokenizer adapted to recognize automotive specific words and abbreviations may significantly improve the accuracy of the NLP engine in understanding and classifying natural language descriptions of car issues/behaviours.

Optionally, the method of training a natural language processing engine further comprises performing fine-tuning training of the pre-trained NLP algorithm using a training data set comprising a corpus of automotive-related text.

Advantageously, further training of the pre-trained NLP algorithm using automotive specific language text may increase the accuracy of the NLP algorithm when processing an input sequence including automotive terms, acronyms, and vehicle specific names used by the user in the natural language description.

Optionally, the pretrained NLP algorithm comprises one of: a Bidirectional Encoder Representations from Transformers, BERT, model; a Generative Pre-trained Transformer, GPT, model; Text-to-Text Transfer Transformer, T5, model; or another large language model.

Advantageously, a wide range of pre-trained BLP algorithms can be used and have found to be accurate and easily adaptable to vehicle issue identification based on an input sequence including a description of a symptom associated with the vehicle issue.

Optionally, the neural network further comprises a prompt-table comprising a task specific set of virtual tokens comprising at least one virtual token to be embedded in the vector representation of the sequence of words, the task specific set of virtual tokens to cause the pre-trained NLP algorithm to classify the input sequence as the predicted vehicle issue of the set of vehicle issues, and wherein the method of training the NLP engine further comprises training a prompt encoder neural network to generate the task specific set of virtual tokens and storing the task specific set of virtual tokens in the prompt-table.

Advantageously, the incorporation of a task specific set of virtual tokens to be included in the vector representation of the input sequence allows the response of the pre-trained NLP algorithm to be influenced to provide a desired output type. The use of a prompt-table may be particularly appropriate for generative NLP algorithms.

According to another aspect of the invention, there is provided a vehicle including the apparatus as described above.

According to another aspect of the invention, there is provided computer readable instructions, which when executed by a computer, are arranges to perform a method as described above.

### BRIEF DESCRIPTION OF THE DRAWINGS

One or more embodiments of the invention will now be described, by way of example only, with reference to the accompanying drawings, in which:
Figure 1 shows a system suitable for implementing embodiments of the invention;
Figure 2 illustrates a method of selecting a drive mode of a vehicle according to embodiments of the invention;
Figure 3 illustrates operation of a method of selecting a drive mode of a vehicle according to embodiments of the invention;
Figure 4 illustrates a computer system suitable for implementing a method of selecting a drive mode of a vehicle in accordance with embodiments of the invention;
Figure 5 illustrates a natural language processing engine according to embodiments of the invention;
Figure 6 illustrates a method of training a natural language processing engine according to embodiments of the invention;
Figure 7 illustrates operation of a method of training a natural language processing engine according to embodiments of the invention; and
Figure 8 illustrates a further natural language processing engine according to embodiments of the invention.

### DETAILED DESCRIPTION

According to embodiments of the invention, a driving mode to use for a condition of terrain to be driven may be automatically identified and selected using natural language processing in response to a natural language description of the current driving conditions or terrain provided by a user. The natural language description of the driving conditions or terrain can be processed using a natural language processing algorithm to classify the described conditions into one of a set of specified classes that are each associated with a driving mode setting available on the vehicle. Once the driving mode to adapt the vehicle settings to the current terrain has been predicted by the natural language processing algorithm, the identified driving mode may be automatically selected.

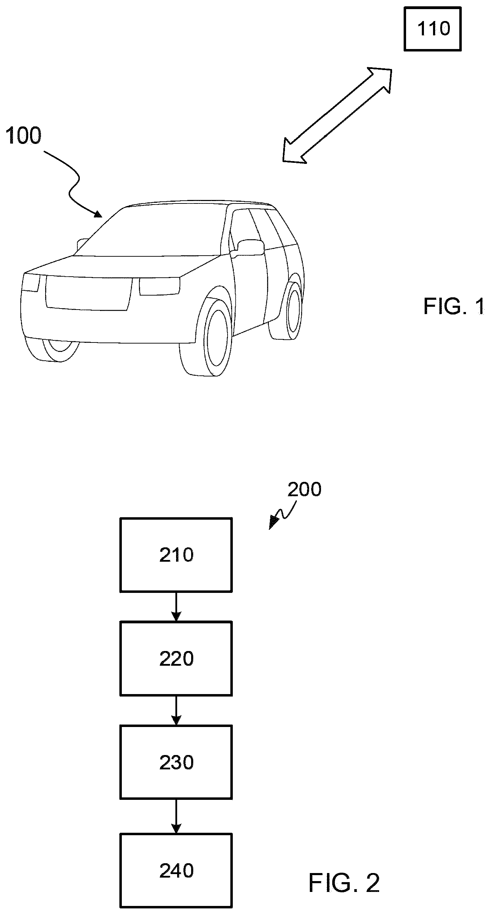

A system in accordance with an embodiment of the present invention is described herein with reference to the accompanying Figure 1. With reference to Figure 1, a vehicle 100 communicates with a software application including a natural language processing, NLP, engine 110. The software application may be executed on a processor of the vehicle 100, or may be executed in a cloud environment, or on one or more servers connected to a network. In embodiments where the software application is not executed on the vehicle 100, communication between the vehicle and the software applications may be via a suitable communication link such as a 4G or 5G mobile communications network.

A user of the vehicle 100 may optionally provide an input to the natural language processing via an in-vehicle interface, such as an infotainment system, or via a voice command captured using a microphone located in the vehicle. In some embodiments, the input to the natural language processing engine 110 may be provided via a mobile terminal or other computing device associated with the user.

An example set of driving modes that may be provided are highlighted in Table 1.

**Table 1**

| | |
|---|---|
| Sand | To maintain momentum on soft surfaces, so the system heightens engine and gearbox response, and locks the centre differential |
| Rock Crawl | To provide improved control on harsh terrain, the accelerator response may be softened |
| Grass-Gravel-Snow | Traction Control intervention may be increased to reduce tyre slip, gear selection biased towards a higher gear and accelerator response softened to help avoid loss of traction |
| Mud-Ruts | Controlled tyre slip is allowed to improve traction in slippery conditions |

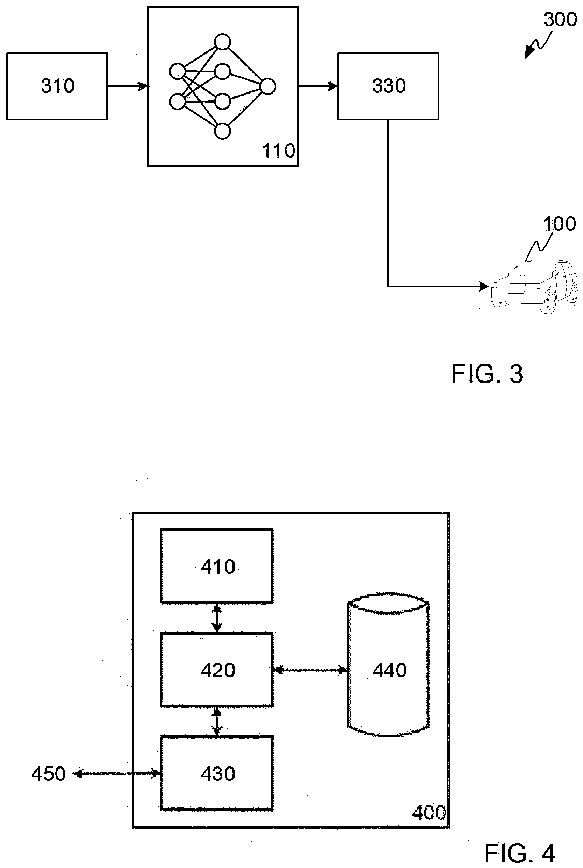

Figure 2 illustrates a computer implemented method 200 according to an embodiment of the present invention that can be implemented in the system illustrated in Figure 1. Figure 3 further illustrates operation of method 200 in accordance with an embodiment of the invention.

The method 200 begins in block 210. In block 210, the method 200 comprises obtaining an input sequence 310 comprising a sequence of words describing a condition of terrain to be traversed by the vehicle. The user may provide a description of the terrain or prevailing conditions in their own words. As may be appreciated, users of different levels of knowledge and experience may provide significantly different descriptions of the same terrain. Some users with high-levels of domain knowledge may provide accurate and specific descriptions using precise technical terms, while less knowledgeable users may provide more ambiguous descriptions using more generic language.

A user may provide the input sequence 310 via text entry into a vehicle user input device, an application executed on a mobile device, etc. or may provide the input sequence as an oral description, for example recorded as an audio signal using a microphone provided as part of an in-vehicle infotainment system. In the case of a spoken input, a speech-to-text algorithm may be used to convert the audio input signal into a text input sequence.

In block 220, the method 200 comprises processing the input sequence 310 using a natural language processing engine 110. The natural language processing engine 110 classifies the input sequence 310 as relating to a predicted terrain condition of a set of terrain conditions. In response to classifying the input sequence 310 as a predicted terrain condition, the natural language processing engine 110 provides an indication of the predicted terrain condition 330. In particular, the natural language processing engine 110 may be operable to correctly classify different descriptions of a same terrain condition provided by users of different levels of knowledge in their own words.

Natural language processing engine 110 may comprise a neural network trained to predict a terrain condition associated with a natural language description of terrain conditions using a set of training data, the training data comprising training example input/output pairs of natural language descriptions of terrain and an associated terrain conditions. Further details regarding natural language processing engines suitable for classifying a sequence of words describing a terrain condition into one of a set of terrain conditions, and the training of such natural language processing engines are discussed below.

In block 230, the method comprises identifying, a drive mode of the vehicle associated with the predicted terrain condition. Identification of the drive mode is based on the identified terrain condition 330 predicted by the natural language processing engine 110. For example, an ID value associated with the predicted terrain condition 330 may be compared against a look-up-table to identify a corresponding drive mode. The look-up-table may include entries for each ID value that associates an appropriate drive mode to be selected with a predicted condition 330 of the terrain to be traversed by the vehicle 100.

In some embodiments, the NLP engine 110 may be operable to determine that insufficient information is available in the input sequence to accurately classify the terrain conditions being described by the user. If it is determined that insufficient information has been provided in the input sequence, a prompt may be generated to the user to request a second input sequence providing further information on the terrain conditions. For example, if a user provides an input sequence including a statement that they are driving on a snowy road, the NLP engine 110 may generate a prompt to illicit further information from the user to allow the NLP engine 110 to differentiate between soft deep snow and hard packed snow which may be associated with different drive mode selection. The second input sequence may then be processed using the NLP engine 110, as discussed above for the initial input sequence to predict a terrain condition. In some embodiments, processing the second input sequence by the NLP engine 110 may include processing the first input sequence to provide context for the second input sequence.

In block 240, the method comprises outputting an indication to the vehicle 100 of the selected drive mode. In response to the receiving the indication, the vehicle 100 may automatically activate the selected drive mode appropriate for the conditions as described by the user of the vehicle 100.

In some examples, a notification may be provided to a user of the vehicle 100 to recommend a particular drive mode is selected and requesting confirmation from the user prior to activating the selected drive mode.

Thus, the method 200 provides for automatic identification of an appropriate drive mode for the condition of the terrain being traversed by the vehicle as described by a user of the vehicle 100 along with automatic selection of the identified drive mode without requiring further interaction by the user. Thus, the user is able to concentrate on operating the vehicle safely as the condition of the terrain may be deteriorating.

While natural processing engine 110 has been illustrated as a single entity in Figure 1, it will be appreciated that the application may be implemented as software modules that may be co-located on a processing apparatus or distributed across a number of processing resources present on vehicle 100. Alternatively, the natural language processing engine 110 may be hosted on a single server or in a cloud environment.

As an illustrative example, a user of a vehicle 100 may provide as an input sequence 310 a terrain condition description of "It's snowed really heavily and is getting deep, which drive mode should I use?". The input sequence 310 can be input to the NLP engine 110 and classified as indicating a terrain condition of soft snow. Based on the identified conditions it is determined that the most appropriate drive mode of the modes illustrated in Table 1 to select is the "Sand" mode, suitable for soft surfaces such as "deep snow", and not the "Grass-Gravel-Snow" mode as might naïvely be selected based on the snowy conditions. The selected "Sand" mode is then output to be selected by the vehicle 100.

Thus, the described method 200 is able to identify an appropriate drive mode based on a natural language description of a current condition of terrain being experienced by a user of the vehicle 100 and provide an output to cause the vehicle 100 to automatically select the identified drive mode.

Certain methods and systems as described herein may be implemented by a processor that processes program code that is retrieved from a non-transitory storage medium. Figure 4 illustrates an example of a computer system 400 operable to implement the described methods according to embodiments of the invention. Computer system 400 includes memory 410, one or more processors 420, network interface 430, and non-transitory computer-readable medium 440. The network interface 430 forms an interface between the computer system 400 and a network 450. The computer-readable medium 440 can be any medium that can contain, store, or maintain programs and/or data for use by or in connection with an instruction execution system or other system for giving effect to instructions. Computer-readable medium can comprise any one of many physical media such as, for example, electronic, magnetic, optical, electromagnetic, or semiconductor media. More specific examples of suitable machine-readable media include, but are not limited to, a hard drive, a random-access memory (RAM), a read-only memory (ROM), an erasable programmable read-only memory, or a portable storage such as, for example, a USB drive or disk.

In Figure 4, the computer-readable storage medium 440 comprises program code to perform a method or implement a device as described herein. For example, the program code when executed may implement a method corresponding to the example shown in Figure 2.

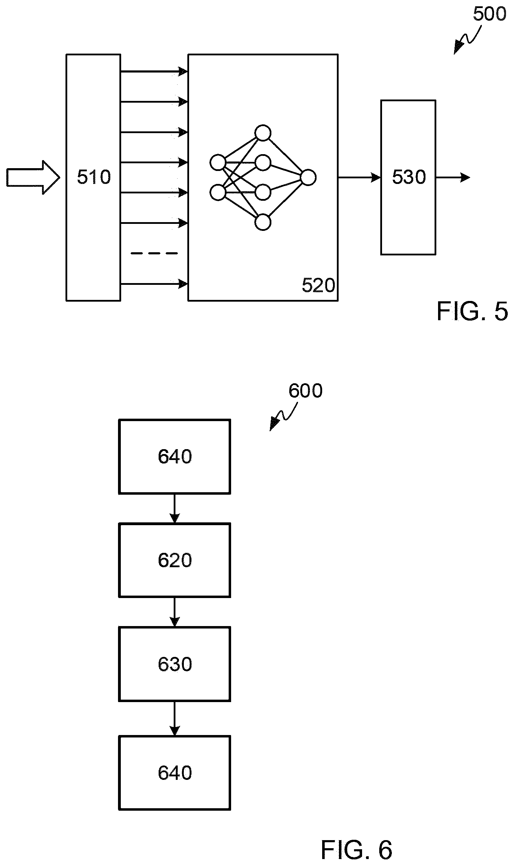

Figure 5 illustrates an example of a natural language processing, NLP, engine 500 according to an embodiment of the present invention and suitable for implementing the method 200 of Figure 2. NLP engine 500 of Figure 5 comprises a tokenizer 510, a pre-trained natural language processing algorithm 520, and a classifier 530. In operation, tokenizer 510 receives an input sequence comprising a sequence of words and splits the input sequence into a plurality of tokens, each token representing a word or subword piece of the input sequence. Each token is assigned a numeric value to generate a vector of values that encodes the words of the input sequence to be input to the pre-trained NLP algorithm 520.

In embodiments, tokenizer 510 may be adapted to recognize words and abbreviations associated with the vehicle 100. For example, tokens corresponding to names of particular components or features of the vehicle, including recognized technical terminology and abbreviations, may be manually added to a list of words recognized by the tokenizer 510. Adapting the tokenizer 510 to recognize the domain specific terminology may increase the accuracy with which the NLP engine 500 is able to classify the input sequence and/or may reduce the training required for the NLP engine 500 to achieve a desired accuracy level.

The pre-trained NLP algorithm 520 receives the tokenized word values vector from the tokenizer 510 and generates an encoded vector that represents, or embeds, a meaning of an input sequence. For example, the NLP algorithm may receive a tokenized input sequence describing a condition of the terrain described in the user's own words and generate a contextualized embedding associated with the terrain conditions being described. In operation, different descriptions of a particular condition of terrain will result in a similar encoded vector recognizing the underlying meaning of the input sequence is the same, relating to the particular terrain conditions.

Pre-trained NLP algorithm 520 may comprise a neural network that has been trained on a large training set of natural language texts. Examples of training corpora used to train the pre-trained NLP algorithm 520 include Wikipedia pages and BooksCorpus. One example of a pre-trained NLP algorithm 520 is a Bidirectional Encoder Representations from Transformers, BERT, model (along with related models such as RoBERTa, DistilBERT, etc.) described in "Devlin, Jacob. "BERT: Pre-training of Deep Bidirectional Transformers for Language Understanding." However, it will be appreciated that alternative NLP algorithms could be used such as: a Generative Pre-trained Transformer, GPT, architecture model; a Text-to-Text Transfer Transformer, T5, model; Megatron-LM model; or another large language model.

The output of the NLP algorithm 520 is then provided to classifier 530, the classifier 530 comprising one or more layers of nodes of a neural network. The classifier 530 is trained to classify the output of the NLP algorithm 520, that is the encoded vector representing the terrain conditions described by the user, as relating to one of a finite number of possible classes with each class associated with a particular terrain condition with an associated drive mode, i.e. the input sequence is classified as relating to one terrain condition of a set of possible terrain conditions that could be present and for which an appropriate drive mode has been specified.

In some embodiments, NLP algorithm 630 may be fine-tuned using a corpus of automotive -related documents (or automotive-related text) such as automotive specific academic papers and standards documents. Furthermore, a corpus used to fine-tune the NLP algorithm 630 may include documents relating to the vehicle 100, for example owner and workshop manuals and other documentation relating to the design and operation of the vehicle 100. Such fine-tuning may significantly increase the accuracy of the NLP engine 600 in understanding language specific to the automotive domain and to the particular vehicle type of which vehicle 100 is an example. Put another way, such fine tuning will configure the tokenizer 510 to recognise automotive specific words in the input sequence.

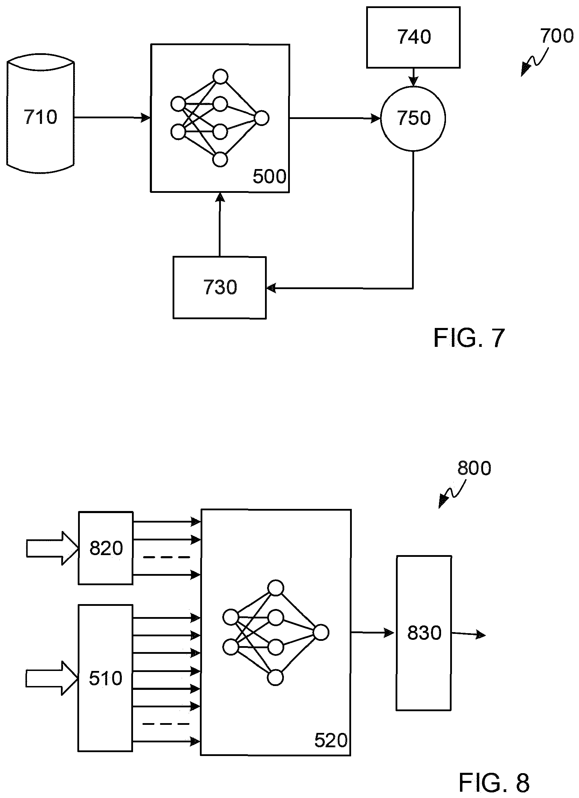

Figure 6 illustrates a computer implemented method 600 according to an embodiment of the present invention to train a natural language processing engine 600 for use in the method of Figure 2. Figure 7 illustrates an iterative process 700 corresponding to the method 600 of training the NLP engine 500 according to an embodiment of the invention.

In the computer implemented method 600 of Figure 6, a store of training data 710 is provided comprising training example input/output pairs of natural language descriptions of terrain conditions and associated classified terrain conditions corresponding to a drive mode to be selected. In block 610 of the method 600, the set of training data 710 to be used to train the NLP engine 500 is received, the training data including training example input/output pairs of natural language descriptions of terrain conditions and associated classified terrain conditions.

In block 620, for one or more of the input/output pairs, the natural language description of the terrain condition is input to the NLP engine 500. For each of the input values used to train the NLP engine 500, an example natural language description input can be provided to NLP engine 500 and an output is generated by the NLP engine 500 in response, the output comprising a predicted classified terrain condition associated with a drive mode.

In block 630, the predicted classification result is compared with the associated terrain condition output 740 corresponding to the natural language terrain condition description of the input/output pair and an error between the predicted classification result and the expected classification results of the training data is characterized. For example, the predicted terrain condition may be compared in comparator 750 with the actual classified terrain condition 740 provided in the training data 710 to characterize an error between the predicted classification result and the corresponding terrain condition identified in the training set.

In block 640, an optimization algorithm, for example is used to update weights of the neural network based on the characterized error. Updated weights may be calculated by a tuning algorithm 730 that receives the output of comparator 750 and in response updates weights of the neural network of the NLP engine 500 using an appropriate optimization algorithm.

In embodiments, during training of the NLP engine 500, weights of the pre-trained NLP algorithm 520 may be frozen and weights of the classifier 530 updated to train the classifier 530 to predict the appropriate terrain condition based on the contextualized embedding of the user's description of the terrain.

Table 2 provides a number of examples of input/output pairs suitable for use as training for training the NLP engine 500 to classify the natural language description of a terrain condition as one of a set of possible terrain condition.

**TABLE 2**

| **OUTPUT:** Classified Terrain Condition | **INPUT:** Natural Language Description of Terrain Conditions |
|---|---|
| Deep soft snow - "Sand" | It has started snowing really hard and it's getting pretty deep |
| Gravel - "Grass-Gravel-Snow" | The road has petered out and turned to gravel |
| Mud - "Mud-Ruts" | It rained really hard at the campsite last night and now I'm getting bogged down trying to get off the field |
| Soft sand - "Sand" | What is the best setting for driving on the beach? |
| Grass - "Grass-Gravel-Snow" | What setting should I use to tow a horse box out of a field? |
| Ice - "Grass-Gravel-Snow" | It was really cold last night and looks pretty icy on the road |

Figure 8 illustrates a further example of a natural language processing, NLP, engine 800 according to an embodiment of the present invention and suitable for implementing the method 200 of Figure 2. NLP engine 800 of Figure 8 is similar to the NLP engine 500 illustrated in Figure 5, comprising a tokenizer 510 and pre-trained NLP algorithm 520, but further includes a prompt-table 820.

Optionally, classifier 530 may be replaced by post-processing module 830 to interpret, or confine, the output of NLP algorithm 520 as belonging to a particular class of the plurality of classes defined for the task being performed. Post-processing module may be particularly applicable when interpreting the output of generative natural language processing algorithms.

The prompt-table 820 may store one or more predefined sets of virtual tokens to be included in the token sequence provided by the tokenizer 510 as input to the pre-trained NLP algorithm, 520. Each of the predefined sets of virtual tokens may influence the NLP algorithm 520 to process the input sequence in a particular way according to a particular task. In particular, the prompt-table 820 may store sets of virtual tokens relating to a plurality of different tasks to be performed using the NLP engine 800. In order to perform a particular task, a set of virtual tokens associated with that task may be retrieved from the prompt-table 820 and included with the token sequence generated by the tokenizer 510.

A task specific set of virtual tokens may be generated for particular task by training a neural network model to predict virtual token embeddings, for example during training of the NLP engine 500 using the method illustrated in Figures 6 and 7. During training, the neural network learns a set of virtual tokens to include in the tokenized input sequence to influence the NLP algorithm 520 to process the input sequence to perform the particular task, i.e. to classify the input sequence as a condition of the terrain of the set of terrain conditions. Training of the neural network used to generate the task specified set of virtual tokens may be achieved using a relatively small set of training data, for example using a gradient decent algorithm, with the weights of the pre-trained NLP algorithm 530 frozen, reducing the computational effort required to train the NLP engine 500 as compared to further fine-tuning training of the NLP pre-trained NLP algorithm 520. Once the task specific set of virtual tokens has been generated, the set of virtual tokens may be stored in prompt-table 820 to be used when the particular task is to be performed.

Thus, the use of prompt-table 820 allows a static pre-trained NLP algorithm to be adapted to different tasks by providing an appropriate set of virtual tokens as part of the input sequence.

The natural language processing engine 800 illustrated in Figure 8, including prompt-table 820 may be particularly, but not exclusively, appropriate when a generative NLP algorithm, such as a Generative Pre-Trained Transformer model, is used to implement embodiments of the invention. Such generative NLP algorithms are capable of generating responses of unlimited length in natural language in response to an input prompt, but may be less suited to classification tasks in the absence of a prompt encoder. Prompt encoding is discussed in more detail in Liu, Xiao, et al. "GPT understands, too." arXiv preprint arXiv:2103.10385 (2021).

In some embodiments, information relating to the classes, e.g. information describing each terrain condition of the set of terrain conditions, may be processed using the pre-trained NLP model to generate an embedding of that information in the form of a class embedding vector representing a semantic meaning of the information relating to each class.

Processing the input sequence 310 describing a terrain condition being experienced by the user using the NLP engine may then comprise generating an input embedding vector for the input sequence 310 and comparing the input embedding vector with each class embedding vector corresponding to the available classification categories to calculate a similarity score between the input embedding vector and each class embedding vector. A terrain condition corresponding to the class embedding vector having the highest similarity score, that is most similar, to the input embedding vector may then be identified as the predicted terrain condition.

## Claims

1. A computer implemented method (200) comprising:
obtaining (210) an input sequence from a user of a vehicle, the input sequence comprising a sequence of words including a natural language description of a condition of terrain to be traversed by the vehicle;
processing (220) the input sequence using a natural language processing, NLP, engine to classify the input sequence as a predicted terrain condition of a set of terrain conditions;
determining (230) a drive mode from a set of drive modes for the vehicle corresponding to the predicted terrain condition; outputting (240) an indication of the determined drive mode to the vehicle; and
causing the vehicle to automatically select the determined drive mode.

2. The computer implemented method (200) of claim 1, wherein the NLP engine is trained to predict a terrain condition associated with the natural language description of a condition of terrain to be traversed by a vehicle using a set of training data, the training data comprising training example input/output pairs of natural language descriptions of condition of terrain and associated terrain conditions.

3. The computer implemented method (200) of any preceding claim, wherein obtaining (210) the input sequence comprises:
obtaining an audio signal; and
performing speech-to-text conversion on the audio signal to generate the input sequence.

4. The computer implemented method of any preceding claim, wherein processing the input sequence using the NLP engine further comprises:
mapping the input sequence to a first embedding vector, the first embedding vector representing a semantic meaning of the natural language description of the condition of terrain to be traversed by the vehicle;
obtaining a plurality of second embedding vectors, each second embedding vector corresponding to one of the drive modes from the set of drive modes for the vehicle and representing a semantic meaning of a description of a terrain condition associated with the one of the drive modes; and
wherein determining the drive mode comprises, for each second embedding vector of the plurality of second embedding vectors, calculating a similarity score to the first embedding vector and selecting a drive mode corresponding to the second embedding vector having the highest similarity score.

5. The computer implemented method (200) of any preceding claim, wherein the natural language processing engine comprises a neural network including a pre-trained NLP algorithm.

6. The computer implemented method (200) of claim 5, wherein the pre-trained NLP algorithm comprises one of: a Bidirectional Encoder Representations from Transformers, BERT, model; a Generative Pre-trained Transformer, GPT, model; Text-to-Text Transfer Transformer, T5, model; or another large language model.

7. The computer implemented method (200) of claim 5 or claim 6 wherein the neural network further comprises a tokenizer to receive the input sequence and generate a vector representation of the sequence of words for input to the pre-trained NLP algorithm wherein the tokenizer is configured to recognize automotive specific words in the input sequence.

8. An apparatus (400) comprising:
a processor (420); and
a memory (410) comprising computer program instructions that when executed by the processor cause the apparatus (400) to:
obtain an input sequence from a user of a vehicle, the input sequence comprising a sequence of words including a natural language description of a condition of terrain to be traversed by the vehicle;
process the input sequence using a natural language processing, NLP, engine to classify the input sequence as a predicted terrain condition of a set of terrain conditions;
determine a drive mode from a set of drive modes for the vehicle corresponding to the predicted terrain condition;
output an indication of the determined drive mode to the vehicle; and
cause the vehicle to automatically select the determined drive mode.

9. The apparatus (400) of claim 8, wherein the computer program instructions, when executed by the processor, are further to cause the apparatus to automatically select the determined drive mode.

10. A method (600) of training a natural language processing engine for classifying a natural language description of a condition of a terrain as a predicted terrain condition of a set of terrain conditions for the use in the method of any of claims 1 to 7, the natural language processing engine comprising a neural network including:
a pre-trained natural language processing, NLP, algorithm comprising a plurality of layers of nodes of the neural network, wherein the weights of the pre-trained NLP algorithm are fixed; and
one or more further layers of nodes of the neural network;
wherein the method (600) comprises:
receiving (610) a set of training data to train the natural language processing engine, the set of training data comprising training example input/output pairs of natural language descriptions of terrain conditions and defined terrain conditions with an associated drive mode;
inputting (620) the natural language description from one or more of the input/output pairs from the set of training data to obtain a predicted classification result;
characterizing (630) an error between the predicted classification result and the defined terrain conditions corresponding to the natural language description of the training set; and
using (640) an optimisation algorithm to update weights of the one or more further layers of the neural network based on the characterized error.

11. The method (600) of claim 10, wherein the pretrained NLP algorithm comprises one of: a Bidirectional Encoder Representations from Transformers, BERT; a Generative Pre-trained Transformer, GPT, model; Text-to-Text Transfer Transformer, T5, model; or another large language model.

12. A vehicle (100) comprising the apparatus of claim 8 or 9.

13. Computer readable instructions (440) which, when executed by a computer, are arranged to perform a method (200) according to claims 1 to 7.

## Patentansprüche

1. Computerimplementiertes Verfahren (200), umfassend:
Erhalten (210) einer Eingabesequenz von einem Benutzer eines Fahrzeugs, wobei die Eingabesequenz eine Sequenz von Wörtern einschließt, die eine natürlichsprachliche Beschreibung einer Bedingung eines von dem Fahrzeug zu befahrenden Geländes einschließt;
Verarbeiten (220) der Eingabesequenz unter Verwendung einer Engine zur Verarbeitung natürlicher Sprache, NLP, um die Eingabesequenz als eine vorhergesagte Geländebedingung eines Satzes von Geländebedingungen zu klassifizieren;
Bestimmen (230) eines Fahrmodus aus einem Satz von Fahrmodi für das Fahrzeug entsprechend der vorhergesagten Geländebedingung;
Ausgeben (240) einer Angabe des bestimmten Fahrmodus an das Fahrzeug; und
Veranlassen des Fahrzeugs, automatisch den bestimmten Fahrmodus auszuwählen.

2. Computerimplementiertes Verfahren (200) nach Anspruch 1, wobei die NLP-Engine trainiert ist, um unter Verwendung eines Satzes von Trainingsdaten eine Geländebedingung vorherzusagen, die mit der natürlichsprachlichen Beschreibung einer Bedingung eines von einem Fahrzeug zu befahrenen Geländes assoziiert ist, wobei die Trainingsdaten Trainingsbeispiel-Eingabe/Ausgabe-Paare von natürlichsprachlichen Beschreibungen einer Bedingung des Geländes und assoziierten Geländebedingungen umfassen.

3. Computerimplementiertes Verfahren (200) nach einem der vorstehenden Ansprüche, wobei das Erhalten (210) der Eingabesequenz umfasst: Erhalten eines Audiosignals; und Durchführen einer Sprache-zu-Text-Umwandlung an dem Audiosignal, um die Eingabesequenz zu erzeugen.

4. Computerimplementiertes Verfahren nach einem der vorstehenden Ansprüche, wobei das Verarbeiten der Eingabesequenz unter Verwendung der NLP-Engine ferner umfasst:
Abbilden der Eingabesequenz auf einen ersten Einbettungsvektor, wobei der erste Einbettungsvektor eine semantische Bedeutung der natürlichsprachlichen Beschreibung der Bedingung des von dem Fahrzeug zu befahrenen Geländes repräsentiert;
Erhalten einer Vielzahl von zweiten Einbettungsvektoren, wobei jeder zweite Einbettungsvektor einem der Fahrmodi aus dem Satz von Fahrmodi für das Fahrzeug entspricht und eine semantische Bedeutung einer Beschreibung einer Geländebedingung darstellt, die mit dem einen der Fahrmodi assoziiert ist; und
wobei das Bestimmen des Fahrmodus umfasst, für jeden zweiten Einbettungsvektor der Vielzahl von zweiten Einbettungsvektoren einen Ähnlichkeitswert zu dem ersten Einbettungsvektor zu berechnen und einen Fahrmodus auszuwählen, der dem zweiten Einbettungsvektor mit dem höchsten Ähnlichkeitswert entspricht.

5. Computerimplementiertes Verfahren (200) nach einem der vorstehenden Ansprüche, wobei die Engine zur Verarbeitung natürlicher Sprache ein neuronales Netz umfasst, das einen vortrainierten NLP-Algorithmus einschließt.

6. Computerimplementiertes Verfahren (200) nach Anspruch 5, wobei der vortrainierte NLP-Algorithmus eines der Folgenden umfasst: ein Bidirectional-Encoder-Representations-from-Transformers-Modell, BERT-Modell; ein Generative-Pre-trained-Transformer-Modell, GPT-Modell; ein Text-to-Text-Transfer-Transformer-Modell, T5-Modell; oder ein anderes großes Sprachmodell.

7. Computerimplementiertes Verfahren (200) nach Anspruch 5 oder 6, wobei das neuronale Netzwerk ferner einen Tokenizer umfasst, um die Eingabesequenz zu empfangen und eine Vektordarstellung der Sequenz von Wörtern zur Eingabe in den vortrainierten NLP-Algorithmus zu erzeugen, wobei der Tokenizer konfiguriert ist, um automobilspezifische Wörter in der Eingabesequenz zu erkennen.

8. Einrichtung (400), umfassend:
einen Prozessor (420) und
einen Speicher (410), der Computerprogrammanweisungen umfasst, die bei Ausführung durch den Prozessor die Einrichtung (400) veranlassen zum:
Erhalten einer Eingabesequenz von einem Benutzer eines Fahrzeugs, wobei die Eingabesequenz eine Sequenz von Wörtern umfasst, die eine natürlichsprachliche Beschreibung einer Bedingung eines von dem Fahrzeug zu befahrenen Geländes einschließt;
Verarbeiten der Eingabesequenz unter Verwendung einer Engine zur Verarbeitung natürlicher Sprache, NLP, um die Eingabesequenz als eine vorhergesagte Geländebedingung eines Satzes von Geländebedingungen zu klassifizieren;
Bestimmen eines Fahrmodus aus einem Satz von Fahrmodi für das Fahrzeug entsprechend der vorhergesagten Geländebedingung;
Ausgeben einer Angabe des bestimmten Fahrzeugmodus an das Fahrzeug; und
Veranlassen des Fahrzeugs, den bestimmten Fahrmodus automatisch auszuwählen.

9. Einrichtung (400) nach Anspruch 8, wobei die Computerprogrammanweisungen, wenn sie von dem Prozessor ausgeführt werden, ferner die Einrichtung veranlassen, den bestimmten Fahrmodus automatisch auszuwählen.

10. Verfahren (600) zum Trainieren einer Engine zur Verarbeitung natürlicher Sprache zum Klassifizieren einer natürlichsprachlichen Beschreibung einer Bedingung eines Geländes als eine vorhergesagte Geländebedingung aus einem Satz von Geländebedingungen zur Verwendung in dem Verfahren nach einem der Ansprüche 1 bis 7, wobei die Engine zur Verarbeitung natürlicher Sprache ein neuronales Netz umfasst, das Folgendes einschließt:
einen vortrainierten Algorithmus zur Verarbeitung natürlicher Sprache, NLP, umfassend eine Vielzahl von Schichten von Knoten des neuronalen Netzwerks, wobei die Gewichte des vortrainierten NLP-Algorithmus fixiert sind; und
eine oder mehrere weitere Schichten von Knoten des neuronalen Netzwerks;
wobei das Verfahren (600) umfasst:
Empfangen (610) eines Satzes von Trainingsdaten, um die Engine zur Verarbeitung natürlicher Sprache zu trainieren, wobei der Satz von Trainingsdaten Trainingsbeispiel-Eingabe/Ausgabe-Paare von natürlichsprachlichen Beschreibungen von Geländebedingungen und definierten Geländebedingungen mit einem assoziierten Fahrmodus umfasst;
Eingeben (620) der natürlichsprachlichen Beschreibung aus einem oder mehreren der Eingabe-/Ausgabe-Paare aus dem Satz von Trainingsdaten, um ein vorhergesagtes Klassifizierungsergebnis zu erhalten;
Charakterisieren (630) eines Fehlers zwischen dem vorhergesagten Klassifizierungsergebnis und den definierten Geländebedingungen entsprechend der natürlichsprachlichen Beschreibung des Trainingssatzes; und
Verwenden (640) eines Optimierungsalgorithmus, um Gewichte der einen oder mehreren weiteren Schichten des neuronalen Netzwerks basierend auf dem charakterisierten Fehler zu aktualisieren.

11. Verfahren (600) nach Anspruch 10, wobei der vortrainierte NLP-Algorithmus eines der Folgenden umfasst: ein Bidirectional-Encoder-Representations-from-Transformers-Modell, BERT-Modell; ein Generative-Pretrained-Transformer-Modell, GPT-Modell; ein Text-to-Text-Transfer-Transformer-Modell, T5-Modell; oder ein anderes großes Sprachmodell.

12. Fahrzeug (100), umfassend die Einrichtung nach Anspruch 8 oder 9.

13. Computerlesbare Anweisungen (440), die, wenn sie durch einen Computer ausgeführt werden, eingerichtet sind, um ein Verfahren (200) nach den Ansprüchen 1 bis 7 durchzuführen.

## Revendications

1. Procédé mis en œuvre par ordinateur (200) comprenant :
l'obtention (210) d'une séquence d'entrée provenant d'un utilisateur d'un véhicule, la séquence d'entrée comprenant une séquence de mots comportant une description en langage naturel d'un état de terrain devant être traversé par le véhicule ;
le traitement (220) de la séquence d'entrée au moyen d'un moteur de traitement du langage naturel, NLP, pour classer la séquence d'entrée en tant qu'état de terrain prédit d'un ensemble d'états de terrain ;
la détermination (230) d'un mode de conduite parmi un ensemble de modes de conduite pour le véhicule correspondant à l'état de terrain prédit ;
la délivrance en sortie (240) une indication du mode de conduite déterminé au véhicule ; et
le fait d'amener le véhicule à sélectionner automatiquement le mode de conduite déterminé.

2. Procédé mis en œuvre par ordinateur (200) selon la revendication 1, dans lequel le moteur NLP est entraîné pour prédire un état de terrain associé à la description en langage naturel d'un état de terrain à traverser par un véhicule au moyen d'un ensemble de données d'apprentissage, les données d'apprentissage comprenant des paires entrée/sortie d'exemples d'apprentissage de descriptions en langage naturel d'état de terrain et d'états de terrain associés.

3. Procédé mis en œuvre par ordinateur (200) selon l'une quelconque revendication précédente, dans lequel l'obtention (210) de la séquence d'entrée comprend :
l'obtention d'un signal audio ; et
la réalisation d'une conversion de la parole en texte sur le signal audio pour générer la séquence d'entrée.

4. Procédé mis en œuvre par ordinateur selon l'une quelconque revendication précédente, dans lequel le traitement de la séquence d'entrée à l'aide du moteur NLP comprend en outre :
le mappage de la séquence d'entrée en un premier vecteur d'intégration, le premier vecteur d'intégration représentant une signification sémantique de la description en langage naturel de l'état du terrain à traverser par le véhicule ;
l'obtention d'une pluralité de seconds vecteurs d'intégration, chaque second vecteur d'intégration correspondant à l'un des modes de conduite de l'ensemble de modes de conduite pour le véhicule et représentant une signification sémantique d'une description d'un état de terrain associé à l'un un parmi les modes de conduite ; et
dans lequel la détermination du mode de conduite comprend, pour chaque deuxième vecteur d'intégration de la pluralité de deuxièmes vecteurs d'intégration, le calcul d'un score de similarité avec le premier vecteur d'intégration et la sélection d'un mode de conduite correspondant au deuxième vecteur d'intégration ayant le score de similarité le plus élevé.

5. Procédé mis en œuvre par ordinateur (200) selon l'une quelconque revendication précédente, dans lequel le moteur de traitement du langage naturel comprend un réseau de neurones comportant un algorithme NLP pré-entraîné.

6. Procédé mis en œuvre par ordinateur (200) selon la revendication 5, dans lequel l'algorithme NLP pré-entraîné comprend l'un parmi : un modèle de représentations d'encodeur bidirectionnel à partir de transformateurs, BERT ; un modèle de transformateur génératif pré-entraîné, GPT ; modèle de transformateur de transfert de texte à texte, T5 ; ou un autre grand modèle de langage.

7. Procédé mis en œuvre par ordinateur (200) selon la revendication 5 ou la revendication 6, dans lequel le réseau de neurones comprend en outre un segmenteur pour recevoir la séquence d'entrée et générer une représentation vectorielle de la séquence de mots pour une entrée dans l'algorithme NLP pré-entraîné, dans lequel le segmenteur est configuré pour reconnaître des mots spécifiques à l'automobile dans la séquence d'entrée.

8. Appareil (400) comprenant :
un processeur (420) ; et
une mémoire (410) comprenant des instructions de programme informatique qui, lorsqu'elles sont exécutées par le processeur, amènent l'appareil (400) à :
obtenir une séquence d'entrée d'un utilisateur d'un véhicule, la séquence d'entrée comprenant une séquence de mots comportant une description en langage naturel d'un état de terrain à traverser par le véhicule ;
traiter la séquence d'entrée à l'aide d'un moteur de traitement du langage naturel, NLP, pour classer la séquence d'entrée en tant qu'état de terrain prédit d'un ensemble d'états de terrain ;
déterminer un mode de conduite parmi un ensemble de modes de conduite pour le véhicule correspondant à l'état de terrain prédit ; délivrer en sortie une indication du mode de conduite déterminé au véhicule ; et
amener le véhicule à sélectionner automatiquement le mode de conduite déterminé.

9. Appareil (400) selon la revendication 8, dans lequel les instructions de programme informatique, lorsqu'elles sont exécutées par le processeur, amènent en outre l'appareil à sélectionner automatiquement le mode de conduite déterminé.

10. Procédé (600) d'entraînement d'un moteur de traitement du langage naturel pour classer une description en langage naturel d'un état d'un terrain comme un état de terrain prédit d'un ensemble d'états de terrain pour une utilisation dans le procédé selon l'une quelconque des revendications 1 à 7, le moteur de traitement du langage naturel comprenant un réseau de neurones comportant :
un algorithme de traitement du langage naturel, NLP, pré-entraîné comprenant une pluralité de couches de nœuds du réseau de neurones, dans lequel les poids de l'algorithme NLP pré-entraîné sont fixes ; et
une ou plusieurs couches supplémentaires de nœuds du réseau de neurones ;
dans lequel le procédé (600) comprend :
la réception (610) d'un ensemble de données d'apprentissage pour entraîner le moteur de traitement du langage naturel, l'ensemble de données d'apprentissage comprenant des paires entrée/sortie d'exemples d'apprentissage de descriptions en langage naturel d'états de terrain et d'états de terrain définis avec un mode de conduite associé ;
l'entrée (620) de la description en langage naturel provenant d'une ou plusieurs parmi les paires entrée/sortie de l'ensemble de données d'apprentissage pour obtenir un résultat de classification prédit ;
la caractérisation (630) d'une erreur entre le résultat de classification prédit et les états de terrain définis correspondant à la description en langage naturel de l'ensemble d'apprentissage ; et
l'utilisation (640) d'un algorithme d'optimisation pour mettre à jour des poids parmi les une ou plusieurs couches supplémentaires du réseau de neurones sur la base de l'erreur caractérisée.

11. Procédé (600) selon la revendication 10, dans lequel l'algorithme NLP pré-entraîné comprend l'un parmi : une représentations d'encodeur bidirectionnel à partir de transformateurs, BERT ; un modèle de transformateur génératif pré-entraîné, GPT ; modèle de transformateur de transfert de texte à texte, T5 ; ou un autre grand modèle de langage.

12. Véhicule (100) comprenant l'appareil selon la revendication 8 ou 9.

13. Instructions lisibles par ordinateur (440) qui, lorsqu'elles sont exécutées par un ordinateur, sont arrangées pour réaliser un procédé (200) selon les revendications 1 à 7.
